# EUROPÄISCHE PATENTANMELDUNG

(11) **EP 4 620 711 A1**
(43) Veröffentlichungstag der Anmeldung: **24.09.2025**
(21) Anmeldenummer: 24165530.7
(22) Anmeldetag: 22.03.2024
(51) Int. Cl.: B60K 1/04

(54) **KRAFTFAHRZEUG MIT TRAGSTRUKTUR UND HOCHVOLTBATTERIE**

(71) Anmelder: MAGNA STEYR Fahrzeugtechnik GmbH & Co KG, 8041 Graz (AT)
(72) Erfinder: ERLACHER, Manuel, 9545 Radenthein (AT); SCHWARZL, Werner, 8301 Laßnitzhöhe (AT); LIENHART, Christian, 8054 Seiersberg (AT); RASTL, Philipp, 8510 Stainz (AT); STADLER, Severin, 5350 Strobl (AT); NEUHOLD, Daniel, 8046 Stattegg (AT)
(74) Vertreter: Zangger, Bernd

(57) **Zusammenfassung**

Ein Kraftfahrzeug umfassend eine Tragstruktur, wobei die Tragstruktur zumindest zwei Längsträger (1) umfasst, ferner umfassend eine Hochvoltbatterie, wobei die Hochvoltbatterie einen die Hochvoltbatterie seitlich begrenzenden Rahmen (2) umfasst, wobei eine Vielzahl von Batteriezellen (3) im Rahmen (2) angeordnet sind, wobei der Rahmen (2) einstückig ausgebildet ist, wobei durch den einstückigen Rahmen (2) zumindest radial innen liegende Abschnitte der Längsträger (1) ausgebildet sind, wobei eine Trägerplatte (4) den, den Rahmen (2) an dessen Unterseite bedeckenden Boden der Hochvoltbatterie bildet, wobei die Batteriezellen (3) auf der Trägerplatte (4) befestigt sind, wobei eine feuerfeste Abdeckung (16) oberhalb der Batteriezellen (3) angeordnet ist und die Hochvoltbatterie nach außen dicht verschließt.

## Beschreibung

### Gebiet der Erfindung

Die vorliegende Erfindung betrifft ein Kraftfahrzeug umfassend eine Tragstruktur und umfassend eine Hochvoltbatterie und ein Verfahren zur Herstellung eines solchen Kraftfahrzeugs.

### Stand der Technik

Es ist bekannt, dass geschlossene Hochvoltbatterien in Kraftfahrzeuge verbaut werden können, insbesondere als Antriebsbatterie zur Bereitstellung einer elektrischen Energie für den Antrieb des Kraftfahrzeugs. Die Batterie besitzt dann einen geschlossenen Batteriekasten bzw. ein geschlossenes Batteriegehäuse, das die Zellmodule beherbergt. Eine solche Hochvoltbatterie wird mittels Schrauben am Fahrzeug befestigt. Dabei ist, außer an den Schraubstellen, üblicherweise ein Spalt zwischen der Batterie und der Fahrzeugstruktur von mindestens einigen Millimetern vorhanden, damit ein Scheuern im Betrieb (Geräusche, Korrosion...) vermieden wird, aber auch um eine kollisionsfreie Montage zu ermöglichen. Zur Wartung oder Reparatur muss die komplette Batterieeinheit vom Fahrzeug demontiert werden.

Batteriegehäuse können dabei Batterierahmen verwenden, die aus mehreren Einzelteilen bestehen und benachbart zu Querträgern, einem Unterfahrschutz, sowie einem Batteriedeckel verbaut sind. Das Batteriegehäuse wird in dem Unterboden befestigt und ist demontierbar. Die Dichtheit der Fahrzeugkarosserie wird über entsprechende Bauteile in der Bodengruppe sichergestellt und ist unabhängig vom Batteriegehäuse.

### Zusammenfassung der Erfindung

Es ist eine Aufgabe der Erfindung, ein Kraftfahrzeug mit einer Tragstruktur und einer Hochvoltbatterie anzugeben, dass einen geringen Bauraumbedarf hat, geringes Gewicht und geringe Herstellungskosten. Eine weitere Aufgabe ist es, ein einfaches und kostengünstiges Verfahren zur Montage der Hochvoltbatterie in einem solchen Kraftfahrzeug anzugeben.

Die Lösung der Aufgabe erfolgt durch ein Kraftfahrzeug umfassend eine Tragstruktur, wobei die Tragstruktur zumindest zwei Längsträger umfasst, ferner umfassend eine Hochvoltbatterie, wobei die Hochvoltbatterie einen die Hochvoltbatterie seitlich begrenzenden Rahmen umfasst, wobei eine Vielzahl von Batteriezellen im Rahmen angeordnet sind, wobei der Rahmen einstückig ausgebildet ist, wobei durch den einstückigen Rahmen zumindest radial innen liegende Abschnitte der Längsträger ausgebildet sind, wobei eine Trägerplatte den, den Rahmen an dessen Unterseite bedeckenden Boden der Hochvoltbatterie bildet, wobei die Batteriezellen auf der Trägerplatte befestigt sind, wobei eine feuerfeste Abdeckung oberhalb der Batteriezellen angeordnet ist und die Hochvoltbatterie nach außen dicht verschließt.

Erfindungsgemäß verwendet eine Hochvoltbatterie als Batteriegehäuse einen einstückigen Rahmen, der nicht nur an den Längsträgern befestigt ist, sondern auch Abschnitte der Längsträger ausbildet. Zusätzlich verwendet das Batteriegehäuse eine Trägerplatte mit daran befestigten Batteriezellen als Boden des Batteriegehäuses. Durch diesen Aufbau wird einerseits der Bauraumbedarf der Hochvoltbatterie reduziert. Bei gleichem Bauraum kann der zur Verfügung stehende Platz im Hochvoltspeicher vergrößert werden und kann für mehr Batteriekapazität genützt werden. Es kommt zu einer Reduktion an Bauteilen und zu reduzierten Kosten und Gewicht. Zudem ist eine feuerfeste Abdeckung oberhalb der Batteriezellen angeordnet und verschließt die Hochvoltbatterie nach außen abdichtend.

Eine vereinfachte Herstellung eines Kraftfahrzeuges wird dadurch ermöglicht. Die Trägerplatte kann unabhängig von der Tragstruktur und vom übrigen Kraftfahrzeug mit Batteriezellen bestückt werden. Die feuerfeste Abdeckung bildet einen sicheren Feuerschutz nach oben hin und somit zu den Fahrzeuginsassen. Die Trägerplatte mit den Batteriezellen bildet eine vormontierbare Einheit und wird mit der feuerfesten Abdeckung abgedichtet. Die feuerfeste Abdeckung kann Teil der vormontierbaren Einheit sein. Diese vormontierte Baugruppe kann an einem mit dem übrigen Kraftfahrzeug gefügten Rahmen befestigt werden.

Bevorzugt ist die feuerfeste Abdeckung abdichtend an der Trägerplatte befestigt, besonders bevorzugt mittels einer abdichtenden Verschraubung. Die abdichtende Befestigung kann ein Dichtelement umfassen.

Die Batterie besteht somit im Kern aus der Trägerplatte, die die Batteriezellen und alle elektrischen Komponenten beinhaltet, und einer feuerfesten Abdeckung, die die Batterie von oben verschließt. Diese Abdeckung macht die Batterie gleichzeitig nach außen hin dicht, und bleibt fix auf der Trägerplatte verbaut. Dadurch entfällt der Aufwand für die Demontage einer Abdeckung beim Einbau der Antriebsbatterie, nach Lieferung bei der Fahrzeugfertigung. Weiters kann ein Batterielieferant einen Dichtheitstest der fertig montierten Batterie schon bei sich im Haus machen, was andernfalls beim Fahrzeughersteller direkt in der Montage gemacht werden muss.

Vorzugsweise umfasst die Trägerplatte, bevorzugt in Y-Richtung und/oder in X-Richtung verlaufende, abstehende Leisten, zwischen welchen die Batteriezellen angeordnet sind. Die Leisten können eine rahmenartige äußere Begrenzung der Trägerplatte bilden und/oder können Taschen zur Aufnahme der Batteriezellen ausbilden. Die feuerfeste Abdeckung ist bevorzugt an den abstehenden Leisten der Trägerplatte abdichtend befestigt, bevorzugt über ein Dichtelement.

Vorzugsweise ist die Trägerplatte an dem Rahmen befestigt, bevorzugt mittels Verschraubung. Die Trägerplatte kann abdichtend an dem Rahmen befestigt sein, beispielsweise mittels eines Dichtelements, oder nicht abdichtend an dem Rahmen befestigt sein.

Vorzugsweise bildet die Unterseite der Trägerplatte ein Unterfahrschutzblech des Kraftfahrzeugs aus. Hierdurch wird noch mehr Bauraum eingespart, nämlich in Fahrzeug Z-Richtung.

Bevorzugt bedeckt ein den Innenraum des Kraftfahrzeugs nach unten abschließendes Bodenblech des Kraftfahrzeugs den Rahmen an dessen Oberseite. Die feuerfeste Abdeckung ist dann unterhalb des Bodenblechs und oberhalb der Batteriezellen, also zwischen Batteriezellen und Bodenblech, angeordnet.

Vorzugsweise bildet der Rahmen an zumindest einem Abschnitt am unteren Ende des Rahmens einen Flansch aus. Der Rahmen ist durch den Flansch an einem anderen Kraftfahrzeugbauteil, insbesondere an einem weiteren Längsträgerbauteil, befestigt. Besonders bevorzugt bildet der Rahmen an zumindest einem Seitenbereich, in dem durch den Rahmen ein radial innen liegender Abschnitt des Längsträgers ausgebildet ist, am unteren Ende des Rahmens einen Flansch aus. Insbesondere kann im Wesentlichen der gesamte Rahmen am unteren Ende des Rahmens einen Flansch ausbilden.

Bevorzugt ist der Flansch seitlich neben der Befestigung der Trägerplatte an dem Rahmen angeordnet, bevorzugt seitlich neben der Verschraubung und/oder neben einem wahlweise angeordneten Dichtelement.

Vorzugsweise ist der Flasch nach unten hin schräg nach außen verlaufend ausgebildet. Hierdurch ist es einfacher, die Trägerplatte, bevorzugt mit darauf montierten Batteriezellen, nachträglich und von unten in den Rahmen einzubringen und am Rahmen zu befestigen.

Der Rahmen wird bevorzugt als letztes Element in die Baugruppe Unterboden eingebracht. Der untere Schwellerflansch, insbesondere das weitere Längsträgerbauteil, weist daher bevorzugt eine Schrägstellung auf, um einerseits den Kleber nicht abzuscheren und andererseits eine Ausmittelung des Bauteiles zu ermöglichen.

Bevorzugt sind Sitzquerträger an dem Deckel der Hochvoltbatterie befestigt.

Vorzugsweise sind durch den einstückigen Rahmen zumindest radial innen liegende Abschnitte zumindest eines Querträgers, bevorzugt zweier Querträger, ausgebildet. Vorzugsweise bilden die Abschnitte von Querträgern die im Kraftfahrzeug vorne und hinten liegenden Abschnitte des Rahmens aus und bilden die Abschnitte von Längsträgern die im Kraftfahrzeug links und rechts liegenden Abschnitte des Rahmens aus.

Bevorzugt werden die Batteriezellen direkt, vorzugsweise als einzelne Batteriezellen, in die Trägerplatte eingesetzt. Besonders bevorzugt bildet die Trägerplatte nach oben hin offene Taschen aus, in welche die Batteriezellen eingesetzt werden.

Ein Verfahren zur Herstellung eines Kraftfahrzeugs, wie zuvor beschrieben, kann vorsehen, dass die Batteriezellen auf der Trägerplatte befestigt werden und dass danach die feuerfeste Abdeckung oberhalb der Batteriezellen angeordnet wird und abdichtend an der Trägerplatte befestigt, insbesondere verschraubt, wird. Diese vormontierte Einbaueinheit kann optional auf Dichtheit geprüft werden und kann danach an den Kunden ausgeliefert werden.

Unabhängig von der Montage der Batteriezellen und der Abdeckung auf der Trägerplatte, und somit unabhängig von der Vormontage dieser Einbaueinheit, wird der Rahmen an einem anderen Kraftfahrzeugbauteil, insbesondere an einem weiteren Längsträgerbauteil montiert. Danach wird die Trägerplatte mit den befestigten Batteriezellen und der befestigten feuerfesten Abdeckung von unten in den bereits an einem anderen Kraftfahrzeugbauteil, insbesondere an einem weiteren Längsträgerbauteil, montierten Rahmen eingebracht und an diesem Rahmen befestigt.

### Kurzbeschreibung der Zeichnungen

Die Erfindung wird im Folgenden beispielhaft unter Bezugnahme auf die Zeichnungen beschrieben.
- Fig. 1: ist eine teilweise Schnittansicht eines erfindungsgemäßen Kraftfahrzeugs, geschnitten in Fahrzeug-X-Richtung.
- Fig. 2: ist eine teilweise Schnittansicht eines erfindungsgemäßen Kraftfahrzeugs, geschnitten in Fahrzeug-Y-Richtung.
- Fig. 3: ist eine teilweise Schnittansicht eines alternativen erfindungsgemäßen Kraftfahrzeugs, geschnitten in Fahrzeug-Y-Richtung.

### Detaillierte Beschreibung der Erfindung

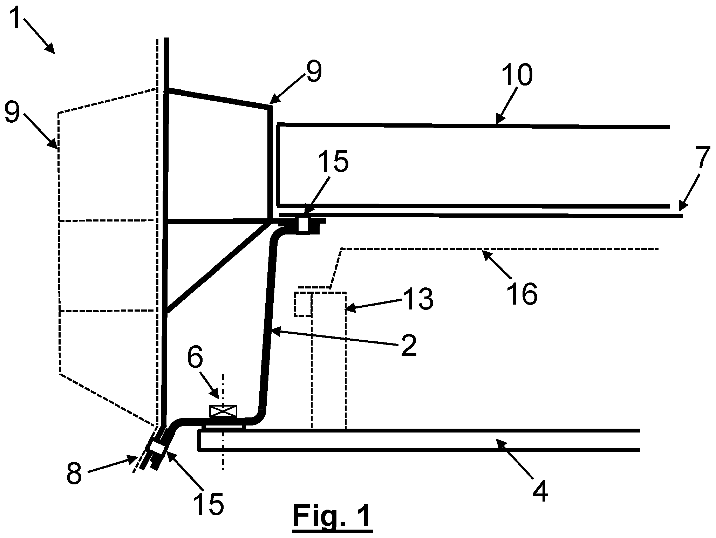

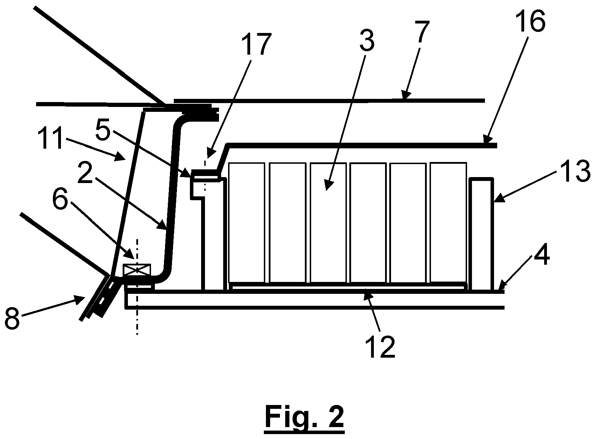

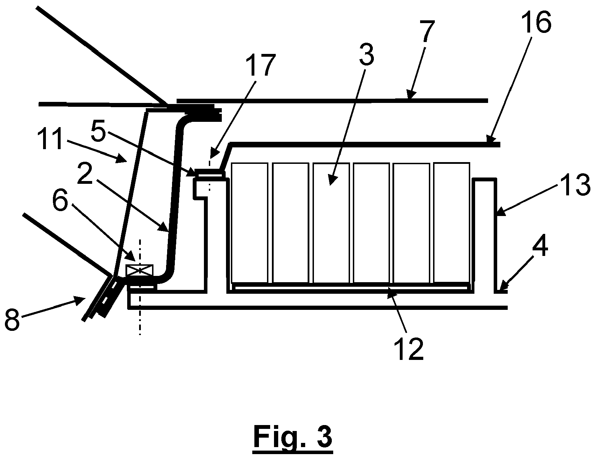

In Fig. 1 ist ein erfindungsgemäßes Kraftfahrzeug in einem Ausschnitt nahe einem Längsträger 1, also einem Schweller, gebildet aus den Bauteilen Rahmen 2 und weitere Längsträgerbauteile 9, dargestellt, wobei die Schnittdarstellung in Fahrzeug-X-Richtung geschnitten ist, also in einer Ebene die normal auf die X-Achse des Kraftfahrzeugs steht. Die Fig. 2 und Fig. 3 zeigen alternative Ausführungen eines erfindungsgemäßen Kraftfahrzeugs, geschnitten in Fahrzeug-Y-Richtung, also in einer Ebene die normal auf die Y-Achse des Kraftfahrzeugs steht.

Wie in Fig. 1 dargestellt umfasst das Kraftfahrzeug eine Tragstruktur, wobei die Tragstruktur zumindest zwei Längsträger 1 umfasst, ferner umfassend eine Hochvoltbatterie, wobei die Hochvoltbatterie einen die Hochvoltbatterie seitlich begrenzenden Rahmen 2 umfasst. Der ringförmige Rahmen 2 ist einstückig ausgebildet. Durch den einstückigen Rahmen 2 sind radial innen liegende Abschnitte der Längsträger 1, also der Schweller, ausgebildet, nämlich innen und unten liegende Abschnitte des Längsträgers 1. Innen oben liegende Abschnitte sowie außen liegende Abschnitte des Schwellers sind durch weitere Längsträgerbauteile 9 ausgebildet. Der Rahmen 2 bildet die seitliche Begrenzung des Batteriegehäuses der Hochvoltbatterie. Der Der Rahmen 2 kann aus Stahl gebildet sein. Eine Trägerplatte 4 bildet den, den Rahmen 2 an dessen Unterseite bedeckenden Boden der Hochvoltbatterie und somit den Boden des Batteriegehäuses. Die Batteriezellen 3 sind, bevorzugt als einzelne Zellen, auf der Trägerplatte 4 befestigt, wie in den Fig. 2 und Fig. 3 dargestellt. Die Batteriezellen 3 können stehend auf der Trägerplatte 4 montiert sein. Eine Kühlplatte 12 kann zwischen Trägerplatte 4 und Batteriezellen 3 angeordnet sein. Die Batteriezellen 3 sind in dem Rahmen 2 angeordnet. Die Unterseite der Trägerplatte 4 bildet ein Unterfahrschutzblech des Kraftfahrzeugs aus.

Ein den Innenraum des Kraftfahrzeugs nach unten abschließendes Bodenblech 7 des Kraftfahrzeugs bildet einen, den Rahmen 2 an dessen Oberseite bedeckenden Deckel der Hochvoltbatterie aus. Sitzquerträger 10 sind an dem Deckel der Hochvoltbatterie, also an dem Bodenblech 7, befestigt.

Wie im oberen Bereich der Fig. 1 ersichtlich, sind der Rahmen 2, das Bodenblech 7, und bevorzugt auch ein weiteres Längsträgerbauteil 9, mittels selbststanzenden Nieten (SPR, self piercing riveting) und Kleber 15 aneinander gefügt.

Zwischen den Batteriezellen 3 und dem Deckel, also dem Bodenblech 7, ist eine feuerfeste Abdeckung 16, als plattenförmiges Element, angeordnet. Die Lage der feuerfesten Abdeckung 16 und einer Leiste 13 der Trägerplatte 4 sind in Fig. 1 nur angedeutet und in Fig. 2 und 3 besser zu erkennen. Die Abdeckung 16 umschließt zusammen mit der Trägerplatte 4 die Batteriezellen 3 dicht. Die feuerfeste Abdeckung 16 ist mittels einer Verschraubung 17 der feuerfesten Abdeckung und über ein Dichtelement 5 an der Trägerplatte 4, insbesondere an den Leisten 13 der Trägerplatte 4, abdichtend befestigt.

Die Trägerplatte 4 kann somit, bevorzugt in Y-Richtung verlaufende, abstehende Leisten 13 aufweisen, die die Batteriezellen 3 außen begrenzen und/oder zwischen welchen die Batteriezellen 3 angeordnet sind. Die Trägerplatte 4 kann mehrteilig ausgebildet sein, so dass beispielsweise die Leisten 13 an eine Grundplatte gefügt sind, bevorzugt geschweißt sind, wie in Fig. 2 dargestellt. Die Trägerplatte 4 kann einteilig ausgebildet sein, wie in Fig. 3 dargestellt und kann bevorzugt durch ein Gussbauteil gebildet sein.

Die Trägerplatte 4 ist abdichtend oder nicht abdichtend an dem Rahmen 2 befestigt, beispielsweise mittels einem Dichtelement, und bevorzugt mittels Verschraubung 6. Die Verschraubung 6 der Trägerplatte 4 am Gehäuse, nämlich am Rahmen 2, ist demontierbar.

Ein Dichtelement kann beispielsweise eine EPDM Dichtung (ethylene propylene diene monomer rubber) sein.

Der Rahmen 2 bildet am unteren Ende des Rahmens einen Flansch 8 aus, wobei der Rahmen durch den Flansch 8 an einem anderen Kraftfahrzeugbauteil, nämlich an einem weiteren Längsträgerbauteil 9, befestigt ist, bevorzugt mittels Kleber 15 und Stanznieten. Der Rahmen 2 kann zusätzlich außerhalb des Flansches 8, insbesondere am oberen Ende des Rahmens 2, an einem anderen Kraftfahrzeugbauteil, bevorzugt an einem weiteren Längsträgerbauteil 9 befestigt sein, beispielsweise mittels Kleber 15 und Stanznieten, wie in Fig. 1 dargestellt.

Der Flansch 8 ist seitlich neben der Befestigung der Trägerplatte 4 an dem Rahmen 2, nämlich seitlich neben dem Dichtelement 5 und der Verschraubung 6, angeordnet.

Der Flasch 8 des Rahmens 2 und auch des weiteren Längsträgerbauteils 9 ist nach unten schräg nach außen verlaufend ausgebildet. Der Flansch ist bevorzugt um etwa 20 bis 40 Grad schräggestellt, vorzugsweise um etwa 30 Grad schräggestellt. Das Einbringen der Trägerplatte 4 von unten in den Rahmen 2 wird dadurch erleichtert, ebenso das Einbringen des Rahmens 2 in das weitere Längsträgerbauteil 9.

Wie in Fig. 2 und 3 gezeigt, können durch den einstückigen Rahmen 2 radial innen liegende Abschnitte von Querträgern 11 ausgebildet sein, insbesondere eines vorne und eines hinten am Rahmen 2 liegenden Querträgers 11.

In einem Verfahren zur Herstellung eines Kraftfahrzeugs wie in Fig. 1 bis 3 dargestellt, werden die Batteriezellen 3 auf der Trägerplatte 4 befestigt, dann die feuerfeste Abdeckung 16 oberhalb der Batteriezellen 3 angeordnet und abdichtend an der Trägerplatte 4 befestigt. Unabhängig davon, beispielsweise an einem anderen Ort, wird der Rahmen 2 an einem anderen Kraftfahrzeugbauteil, insbesondere an einem weiteren Längsträgerbauteil 9 montiert. Danach wird die Trägerplatte 4 mit den befestigten Batteriezellen 3 und der feuerfesten Abdeckung 16 von unten an dem bereits an einem anderen Kraftfahrzeugbauteil, insbesondere an einem weiteren Längsträgerbauteil 9, montierten Rahmen 2 befestigt.

Die Erfindung beschreibt somit die Integration eines Hochvoltspeichers, hergestellt aus einem einteiligen umlaufenden Ring, nämlich Rahmen 2, der von unten in eine Bodengruppe integriert wird und mit einem Batteriemodul von unten verschlossen wird, das seinerseits aus einer Trägerplatte 4, die mit Batteriezellen 3 bestückt ist und mit einer Abdeckung 16 verschlossen ist, besteht.

Bei dieser Bauweise wird ein einteiliger umlaufender Ring aus Stahl, Rahmen 2, von unten fix in den Rohbau gefügt. Der einteilige Ring ersetzt einerseits den Schweller innen unten, und grenzt gleichzeitig das Batteriegehäuse zum Schweller hin ab.

Dieser Ring wird als letztes Element in die Baugruppe Unterboden eingebracht, was eine Schrägstellung des unteren Schwellerflansches, Flansch 8, notwendig macht, um einerseits den Kleber 15 nicht abzuscheren und andererseits eine Ausmittelung des Bauteiles möglich macht.

Der so entstandene Hohlraum dient als Bauraum für eine Antriebsbatterie, und wird beim Einbau der Batterieeinheit verschlossen.

Die Batterie besteht aus einer Trägerplatte 4 die die Batteriezellen 3 und alle elektrischen Komponenten beinhaltet, und einer feuerfesten Abdeckung 16, die die Batterie von oben verschließt.

Diese Abdeckung mach die Batterie gleichzeitig nach außen hin dicht, und bleibt fix auf der Trägerplatte 4 verbaut. Dadurch entfällt der Aufwand für die Demontage einer Batterieabdeckung beim Einbau der Antriebsbatterie. Weiters kann der Batterielieferant den Dichtheitstest der fertig montierten Batterie schon bei sich im Haus machen, was ansonsten beim Fahrzeughersteller direkt in der Montage gemacht werden müsste.

Die Trägerplatte 4 für die Batteriezellen 3 kann aus einer mehrteiligen Schweißkonstruktion bestehen, und in einer Ausführungsvariante auch als einteiliges Gussbauteil hergestellt werden.

Die Trägerplatte 4 bildet nach oben hin Taschen aus in denen die Batteriezellen 3 direkt eingesetzt werden können, ohne vorher als Module zusammengefasst werden zu müssen.

Die Vormontage der Antriebsbatterie erfolgt bevorzugt im ausgebauten Zustand bei einem Lieferanten, und die Batterie wird mit einer Hochvoltabdeckung gesichert, angeliefert. Zuerst werden die Kühlplatten 12 in die Trägerplatte 4 eingelegt, anschließend werden die Zellen 3 von oben in die Trägerplatte 4 eingesetzt und elektrisch miteinander verbunden. Zum Schluss wird die Trägerplatte 4 und die Abdeckung 16 miteinander verschraubt, mittels Verschraubung 17. Anschließend wird die Batterie auf Dichtheit geprüft und kann danach an den Kunden ausgeliefert werden.

Ein wesentlicher Vorteil dieser Anordnung ist der Entfall von einem gro-ßen Bauteil (Batteriecover), sowie die Integration mehrerer Bauteile und die damit verbundene Einsparung an Kosten und Gewicht.

Eine Modulbauweise der Batteriezellen 3 kann bei dieser Bauweise auf einfache Weise durch eine cell-to-pack Anordnung ersetzt werden, wodurch eine höhere Energiedichte bei gleichem Bauraum realisiert werden kann.

Die Z-Maßkette wird ebenfalls kleiner aufgrund des fehlenden Luftspaltes zwischen Bodenplatte und Batteriegehäuse.

### Bezugszeichenliste

- 1: Längsträger
- 2: Rahmen
- 3: Batteriezellen
- 4: Trägerplatte
- 5: Dichtelement
- 6: Verschraubung
- 7: Bodenblech
- 8: Flansch
- 9: weiteres Längsträgerbauteil
- 10: Sitzquerträger
- 11: Querträger
- 12: Kühlplatte
- 13: Leisten
- 15: Selbststanzende Nieten und Kleber
- 16: feuerfeste Abdeckung
- 17: Verschraubung der feuerfesten Abdeckung

## Patentansprüche

1. Kraftfahrzeug umfassend eine Tragstruktur, wobei die Tragstruktur zumindest zwei Längsträger (1) umfasst, ferner umfassend eine Hochvoltbatterie, wobei die Hochvoltbatterie einen die Hochvoltbatterie seitlich begrenzenden Rahmen (2) umfasst, wobei eine Vielzahl von Batteriezellen (3) im Rahmen (2) angeordnet sind,
**dadurch gekennzeichnet, dass** der Rahmen (2) einstückig ausgebildet ist, wobei durch den einstückigen Rahmen (2) zumindest radial innen liegende Abschnitte der Längsträger (1) ausgebildet sind, wobei eine Trägerplatte (4) den, den Rahmen (2) an dessen Unterseite bedeckenden Boden der Hochvoltbatterie bildet, wobei die Batteriezellen (3) auf der Trägerplatte (4) befestigt sind, wobei eine feuerfeste Abdeckung (16) oberhalb der Batteriezellen (3) angeordnet ist und die Hochvoltbatterie nach au-ßen dicht verschließt.

2. Kraftfahrzeug nach Anspruch 1,
**dadurch gekennzeichnet, dass** die feuerfeste Abdeckung (16) abdichtend an der Trägerplatte (4) befestigt ist, bevorzugt mittels einer abdichtenden Verschraubung (17) und/oder über ein Dichtelement (5).

3. Kraftfahrzeug nach Anspruch 2,
**dadurch gekennzeichnet, dass** die Trägerplatte (4), bevorzugt in Y-Richtung verlaufende, abstehende Leisten (13) aufweist, zwischen welchen die Batteriezellen (3) angeordnet sind, wobei die feuerfeste Abdeckung (16) abdichtend an den abstehenden Leisten (13) der Trägerplatte (4) befestigt ist, vorzugsweise über das Dichtelement (5).

4. Kraftfahrzeug zumindest einem der vorhergehenden Ansprüche,
**dadurch gekennzeichnet, dass** die Trägerplatte (4) an dem Rahmen (2) befestigt ist, bevorzugt mittels Verschraubung (6).

5. Kraftfahrzeug nach zumindest einem der vorhergehenden Ansprüche,
**dadurch gekennzeichnet, dass** die Unterseite der Trägerplatte (4) ein Unterfahrschutzblech des Kraftfahrzeugs ausbildet.

6. Kraftfahrzeug nach zumindest einem der vorhergehenden Ansprüche,
**dadurch gekennzeichnet, dass** ein den Innenraum des Kraftfahrzeugs nach unten abschließendes Bodenblech (7) des Kraftfahrzeugs den Rahmen (2) an dessen Oberseite bedeckt.

7. Kraftfahrzeug nach zumindest einem der vorhergehenden Ansprüche,
**dadurch gekennzeichnet, dass** der Rahmen (2) an zumindest einem Abschnitt am unteren Ende des Rahmens einen Flansch (8) ausbildet, wobei der Rahmen durch den Flansch (8) an einem anderen Kraftfahrzeugbauteil, insbesondere an einem weiteren Längsträgerbauteil (9), befestigt ist.

8. Kraftfahrzeug nach Anspruch 4 und Anspruch 7,
**dadurch gekennzeichnet, dass** der Flansch (8) seitlich neben der Befestigung der Trägerplatte (4) an dem Rahmen (2), bevorzugt seitlich neben dem Dichtelement (5) und der Verschraubung (6), angeordnet ist.

9. Kraftfahrzeug nach Anspruch 7 oder Anspruch 8,
**dadurch gekennzeichnet, dass** der Flasch (8) nach unten schräg nach außen verlaufend ausgebildet ist.

10. Kraftfahrzeug nach zumindest einem der vorhergehenden Ansprüche,
**dadurch gekennzeichnet, dass** Sitzquerträger (10) an dem Bodenblech (7) befestigt sind.

11. Kraftfahrzeug nach zumindest einem der vorhergehenden Ansprüche,
**dadurch gekennzeichnet, dass** durch den einstückigen Rahmen (2) zumindest radial innen liegende Abschnitte zumindest eines Querträgers (11), bevorzugt zweier Querträger (11), ausgebildet sind.

12. Kraftfahrzeug nach zumindest einem der vorhergehenden Ansprüche,
**dadurch gekennzeichnet, dass** die Batteriezellen (3) direkt in die Trägerplatte (4) eingesetzt werden, wobei bevorzugt die Trägerplatte (4) nach oben hin Taschen ausbildet, in welche die Batteriezellen (3) eingesetzt werden.

13. Verfahren zur Herstellung eines Kraftfahrzeugs nach zumindest einem der vorhergehenden Ansprüche,
**dadurch gekennzeichnet , dass** die Batteriezellen (3) auf der Trägerplatte (4) befestigt werden, dass die feuerfeste Abdeckung (16) oberhalb der Batteriezellen (3) angeordnet wird und abdichtend an der Trägerplatte (4) befestigt wird, dass der Rahmen (2) an einem anderen Kraftfahrzeugbauteil, insbesondere an einem weiteren Längsträgerbauteil (9) montiert wird, wobei danach die Trägerplatte (4) mit den befestigten Batteriezellen (3) und der befestigten feuerfesten Abdeckung (16) von unten an dem bereits an einem anderen Kraftfahrzeugbauteil, insbesondere an einem weiteren Längsträgerbauteil (9), montierten Rahmen (2) befestigt wird.
